# EUROPEAN PATENT SPECIFICATION

(11) **EP 2 923 266 B1**
(45) Date of publication and mention of the grant of the patent: **03.02.2021**
(21) Application number: 13868203.4
(22) Date of filing: 27.12.2013
(51) Int. Cl.: G06F 12/08, G06F 12/0862, G06F 12/0846, G06F 8/41, G06F 9/30, G06F 9/345, G06F 9/38

(54) **SOFTWARE AND HARDWARE COORDINATED PREFETCH**
SOFTWARE- UND HARDWARE-KOORDINIERTE VORAUSLADUNG
PRÉLECTURE LOGICIELLE ET MATÉRIELLE COORDONNÉE

(30) Priority: 28.12.2012 US 201213730314
(43) Date of publication of application: 30.09.2015
(73) Proprietor: Huawei Technologies Co., Ltd., Longgang District Shenzhen, Guangdong 518129 (CN)
(72) Inventor: YE, Handong, Sunnyvale, California 94086 (US); HU, Ziang, Union City, California 94587 (US)
(74) Representative: Körber, Martin Hans
(86) International application number: PCT/CN2013/090652
(87) International publication number: WO 2014/101820

(56) References cited:
- WO-A1-2006/050289
- CN-A- 1 650 260
- CN-A- 101 620 526
- JP-A- 2001 166 989
- US-A- 5 357 618
- US-A1- 2003 204 840
- US-A1- 2003 208 660
- US-A1- 2005 262 307
- US-B1- 6 401 192

## Description

### FIELD OF INVENTION

The present invention relates to communication network, and, in particular to software and hardware coordinated prefetch.

### BACKGROUND

Processor performance has been improving at a much faster rate than memory system performance. Thus, modern processors (e.g., microprocessors) are typically much faster than the memory system, meaning data and/or instructions stored in the memory system may not be read/written fast enough to keep a processor busy. Cache memory is a cost-effective way to store a relatively small amount of data and/or instructions closer to the processor, since the cache may have a speed comparable with the processor. When executing a program, the processor may first check to see if information (e.g., data or instruction(s)) is available or present in a cache. In the event of a cache miss (i.e., a negative checking result), the processor may need to obtain the information from the memory system.

For example, US 2005/262307 A1 refers to a control mechanism that allows individual applications to turn hardware prefetch on or off. By preliminary trial run one can determine precisely whether an application will benefit or suffer from hardware prefetch.

The selective control of prefetching by individual applications is made possible by associating a status bit with individual processes in the machine status word of each processor. Using this prefetch bit, a process turns prefetching on or off to its own advantage in the processor core immediately after a context switch.

Further, US 5,357,618 refers to a cache prefetch and bypass using stride registers.

In addition, US 6,401,192B1 refers to an apparatus for software initiated prefetch.

Further, US 2003/0204840A1 refers to an apparatus and method for one-pass profiling to concurrently generate a frequency profile and a stride profile to enable data prefetchi9ng in irregular programs.

Further, US 2003/0208660A1 refers to a memory region based data pre-fetching.

In addition, CN 101620526A refers to a method for reducing resource consumption of an instruction memory on a stream processor chip.

Further, WO 2006/050289A1 refers to a method and apparatus for pushing data into a processor cache.

Further, JP 2001 166989 A refers to a hardware technique combined with a software technique. The hardware stores the values of these that is, the start address, element size, stride, start interval, and the number of elements of the data object. Once started by software, the hardware controls the prefetch of the hardware object to a prefetch buffer until the prefetch of all the objects is ended. At the same time, an application fetches already available data by performing access to a second level cache and the prefetch buffer in parallel.

Prefetching is a technique that avoids some cache misses by bringing information into the cache before it is actually needed by the program. There may be hardware prefetching and software prefetching. Hardware prefetching may use a miss history table (MHT) to contain a number of cache misses (or missed memory requests) by a program. Based on entries of the MHT, a processor may predict a memory address that is needed next by the program. For example, a hardware-based predicting logic in the processor may analyze the last 3 missed memory addresses in the MHT, which may be consecutive, to predict a next memory address. Then, the data stored in the next memory address may be prefetched from the memory system before the data is needed by the program. The data may be stored in an extra prefetch buffer in the processor. Usually, data is transferred between memory and cache in blocks of fixed size (e.g., 64 or 128 bytes), which may be referred to as cache lines. When a cache line is copied from the memory into the cache, a cache entry is created. The cache entry may include the copied data and the requested memory address or location.

Since hardware prefetching is based on the knowledge of previous memory accesses (obtained from the MHT), it may be good at prefetching regular memory accesses, such as media streaming data. However, hardware prefetching may require extra hardware resource to implement a MHT, a prefetch buffer, and hardware-based predicting logic. In addition, since the predicting logic may lack understanding of the program (e.g., loop structure, code segments), unwanted or incorrect data or instruction may often be prefetched, thereby lowering accuracy of hardware prefetching. The low accuracy may increase a bandwidth requirement and a likelihood of cache pollution. For example, in some control flow programs, hardware prefetching may reduce processor performance. Furthermore, turning on hardware prefetching all the time may result in power consumption issues.

On the other hand, software prefetching may rely on a compiler to insert prefetching instructions before data is needed. Since the compiler may understand logics in a program, it may predict a memory access pattern required by the program. Thus, software prefetching may achieve higher accuracy than hardware prefetching. However, software prefetching may need extra instructions/registers to compute memory addresses, which may cause significant code expansion. For example, the compiler may need to insert prefetch instructions for every iteration in a loop structure of the program. Furthermore, since prefetching is performed iteration-by-iteration, sometimes it may be difficult to schedule a prefetching event early enough to remove or minimize memory latency. In addition, sometimes the compiler may be configured to perform code transformations, such as instruction scheduling and loop unrolling, in advance in order to make best use of software prefetching. The code transformations may sometimes bring unpredictable impact on the performance of the processor.

### SUMMARY

The above mentioned problems are solved by the subject matter of the independent claims.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an embodiment of a processor system
FIG. 2 is a diagram of an embodiment of a control register.
FIGS. 3A-3C illustrate a comparison of an embodiment of a coordinated prefetching scheme with a conventional software prefetching scheme on an examplary code snippet.
FIGS. 4A and 4B illustrate an embodiment of another coordinated prefetching scheme on another examplary code snippet.
FIG. 5 illustrates an embodiment of a coordinated prefetching method.
FIG. 6 illustrates an embodiment of a network component or computer system.

### DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein.

Disclosed herein are systems and methods for software and hardware coordinated prefetching. In a disclosed prefetching scheme, an extra programmable register memory is incorporated into a processor to control a state of hardware prefetching. In an embodiment, the control register comprises a plurality of bits, some of which are used to turn on/off the hardware prefetching, and some other bits are used to set a stride of hardware prefetching. The control register may be programmed (i.e., written and read) by a programmer or a compiler. Specifically, the compiler may be used to set the control register to indicate an on or off state of hardware prefetching and a prefetching stride. When the compiler analyzes a program segment or code segment containing regular memory accesses, which may be predicted by prefetching hardware, it may turn on hardware prefetching and set the appropriate prefetching stride before the code segment. Further, the compiler may turn off the hardware prefetching after the code segment. Otherwise, if the memory accesses are irregular according to the compiler, prefetching instructions may be inserted as usual. Embodiments of the coordinated prefetching scheme may possess advantages over conventional software or hardware prefetching schemes. For example, for regular memory accesses, as no prefetching instruction may need to be inserted into the code segment any more, the problem of code expansion may be alleviated, and instruction level parallelism may be improved. Further, since the disclosed prefetching scheme is based on the knowledge of program (analysis by the compiler), the accuracy of hardware prefetching may be improved, which in turn reduces the cache pollution, bandwidth requirement, and power consumption.

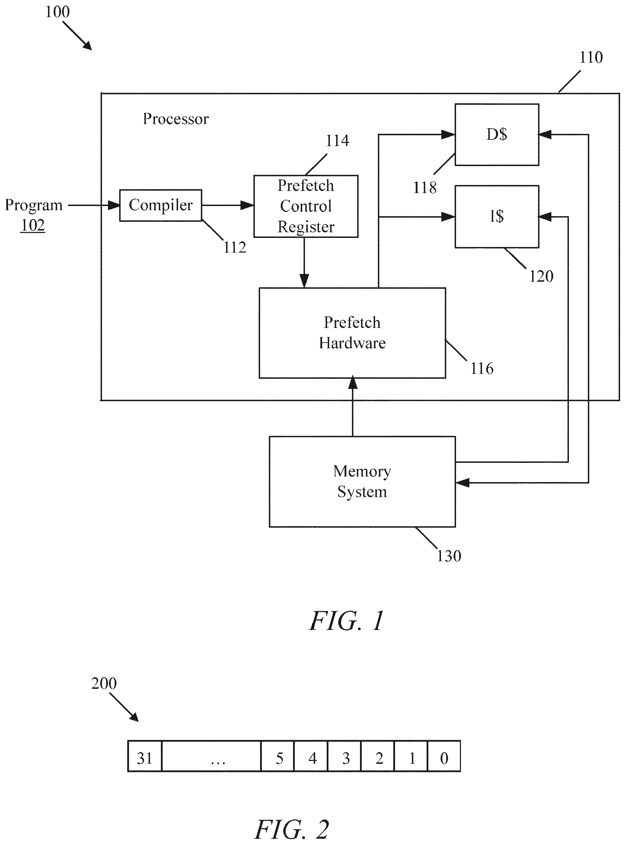

FIG. 1 illustrates an embodiment of a processor system 100, in which embodiments of disclosed prefetching schemes may be implemented. The processor system 100 may comprise a processor 110 and a memory system 130, and the processor 110 may comprise a compiler 112, a prefetch control register 114, prefetch hardware 116, a data cache 118 (denoted as D$), and an instruction cache 120 (denoted as 1$) arranged as shown in FIG. 1. In the processor system 100, a computer program 102 may be fed into the compiler 112, which may transform the program 102 from a source code to an object code. The source code of the program 102 may be written in a programming language, and the object code compiled by the compiler 112 may be an executable program in a binary form. For example, the compiler 112 may translate the program 102 from a high-level programming language (e.g., C++ or Java) to a low-level language (e.g., an assembly language or machine code). Further, the compiler may analyze the program 102 to determine a pattern of memory access the program 102 requires. Based on the analysis, the compiler may perform code transformations, such as instruction scheduling and loop unrolling, to optimize data/instruction prefetching. For example, an execution order of some loops may be changed to more efficiently access data or instructions in the memory system 130. Overall, the compiler 112 understands logics of the program 102 and its memory access pattern. Thus, the compiler may determine how data or instructions should be prefetched to execute the program 102.

In an embodiment, data or instructions may be prefetched in a coordinated fashion between hardware prefetching and software prefetching. When executing a code snippet or segment of the program 102, the processor 110 may first use the compiler 112 to determine a memory access pattern corresponding to the code segment (e.g., a loop). Then, if the memory access pattern is predictable or regular according to the compiler 112, the processor 110 may use hardware prefetching to prefetch data or instructions required by the code segment. Otherwise if the memory access pattern is unpredictable or irregular according to the compiler 112, software prefetching may be used, or hardware prefetching may be turned off. For example, if the code segment involves repeated executions of a random function, the compiler may not prefetch any data for the random function. Code snippet or segment may be a programming term referring to a small region of re-usable source code or object code. For example, code segments may be formally-defined operative units that are incorporated into larger programming modules.

The compiler 112 may indicate a state of hardware prefetching using the prefetch control register 114. The state of hardware prefetching may include its on/off state and its prefetching stride. The prefetching stride in hardware prefetching may indicate a distance (in units of cache lines) between two consecutively accessed data or instructions. The control register 114 may comprise a plurality of bits configured to indicate the on/off state of hardware prefetching and the prefetching stride. Thus, the control register 114 is programmable and controlled by the compiler 112. Compared with conventional prefetching schemes, the control register 114 may be an extra register incorporated into the processor 110. The control register 114 may be implemented by any appropriate on-chip memory. Although illustrated as one register, depending on the application, the on/off state and the prefetching stride may be indicated separately by different registers.

Based on the control register 114, the prefetch hardware 116 may prefetch data from the memory system 130 to the data cache 118. The instruction cache 120 may be similar to the data cache 118, except that the processor 110 may only perform read accesses (instruction fetches) to the instruction cache 120. The data cache 118 is configured to store data (e.g., table entries, variables, and integers), and the instruction cache 120 configured to store instructions as to how the program should be executed. In practice, the data cache 118 and the instruction cache 120 may be checked first to see if the data or instructions are present (e.g., by checking corresponding memory addresses). If a negative result is returned, data may then be copied from the memory system 130 to the data cache 118, and instruction(s) directly located in the memory system 130 without being copied to the instruction cache 120.

Although illustrated as on-chip caches (i.e., on the same physical chip with the processor 110), the data cache 118 and instruction cache 120 may also be off-chip caches that are coupled to the processor 110. In some cases, the data cache 118 and instruction cache 120 may be implemented as a single cache for simplicity. Alternatively, modern processors may be equipped with multiple independent caches. For example, central processing units (CPUs) used in desktop computers and servers may comprise an instruction cache to speed up executable instruction fetch, a data cache to speed up data fetch and storage, and a translation lookaside buffer (TLB) to speed up virtual-to-physical address translation for both executable instructions and data. In this case, the data cache 118 may be organized as a hierarchy of more cache levels, such as a level-1 (L1), level-2 (L2), and level-2 (L3). The memory system 130 may comprise one or more memories of any type. For example, the memory system 130 may be an on-chip memory, such as cache, special function register (SFR) memory, internal random access memory (RAM), or an off-chip memory, such as external SFR memory, external RAM, hard drive, universal serial bus (USB) flash drive, or any combination thereof.

FIG. 2 illustrates an embodiment of a control register 200, which may be implemented in a processor system, e.g., as the control register 114. Suppose, for illustrative purposes, the control register 200, denoted as REGCTRL, has a size of 32 bits, although it should be understand that any other size will work within the scope of this disclosure. As shown in FIG. 2, each of the 32 bits of the control register 200 may be denoted as REGCTRL[i], where i=0, 1, ..., 31. REGCTRL[0] represents the least significant bit (LSB), while REGCTRL[31] represents the most significant bit (MSB). Any bit(s) of the control register 200 may be configured to indicate an on/off state and a prefetching stride of hardware prefetching. In an embodiment, REGCTRL[0] may indicate the on/off state and the bits next to REGCTRL[0] may indicate the prefetching stride. For example, if the prefetching stride is between one and four, two additional bits (i.e., REGCTRL[1-2]) may be used. In this case, the bits REGCTRL[0-2] may be configured to indicate the following:
(1) If REGCTRL[0] == 0, turn on hardware prefetching;
(2) If REGCTRL[0] == 1, turn off hardware prefetching;
(3) If REGCTRL[1-2] == 00, set prefetching stride to one;
(4) If REGCTRL[1-2] == 01, set prefetching stride to two;
(5) If REGCTRL[1-2] == 10, set prefetching stride to three; and
(6) If REGCTRL[1-2] = 11, set prefetching stride to four;

If prefetching stride is set to, for example, two, a memory address prefetched next is two cache lines away from the currently prefetched memory address. Note that if the prefetching stride is more than four, more bits in the control register 200 may be used to accommodate this configuration. Further, if desired, the on/off state and the prefetching stride may be indicated using two control registers. Thus, the size of the control register 200 may be tailored to fit its intended use. In addition, it should be understood that changing interpretation of the bit value is covered in the scope of this disclosure. For example, the interpretation may be changed such that a "0" bit value of REGCTRL[0] indicates that hardware prefetching is turned on, and an "1" off.

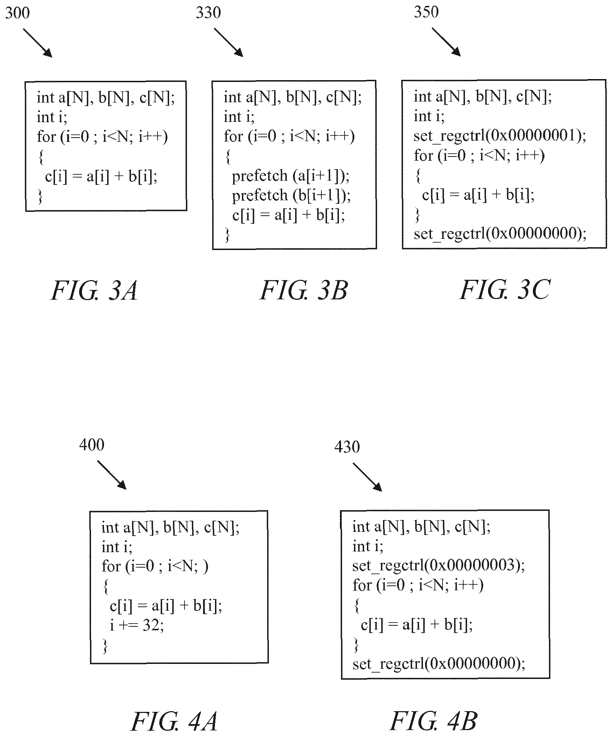

FIG. 3A illustrates an examplary code snippet 300, which comprises a "for" loop and may be implemented by any programming language (e.g., C or C++). In the code snippet 300, each iteration adds two integers a[i] and b[i] to produce another integer c[i], where i is an iteration index between 0 and N, and where N is a size of the a and b integer arrays. Since the a and b integer arrays are located in a memory system, the two arrays may be accessed regularly, e.g., with a[i] values read consecutively.

FIG. 3B illustrates a conventional software prefetching scheme 330, which is implemented on the code snippet 300. In the conventional software prefetching scheme 330, even though the memory access is regular, a compiler may still insert two prefetching instructions inside the loop body. The prefetching instructions, i.e., prefetch (a[i+1]) and prefetch (b[i+1]) need to be executed in every iteration of the loop. Note that a[i+1] and b[i+1] are prefetched, instead of a[i] and b[i], so that they may be copied into the data cache before actually needed by the program. Since the prefetching instructions may waste pipeline and some of them may be redundant, repeated executions of the prefetching instruction may increase overall code size, execution time, and bandwidth requirement.

FIG. 3C illustrates an embodiment of a coordinated prefetching scheme 350, which is implemented on the code snippet 300. A compiler may understand, based on the code snippet 300, that the current loop reads the a[i] and b[i] arrays consecutively, which is a regular pattern. Accordingly, the compiler may insert a first instruction before the loop body to set certain bits of the control register (i.e., REGCTRL). For example, as shown in FIG. 3C, an instruction "set_regctrl(0x00000001)" sets the LSB of the control register to 1 and all other bits to 0, which indicates that hardware prefetching is turned on and the prefetching stride equals one. Note that the 8 numbers 00000001 represent 32 bits as this is a hexadecimal representation. Further, the compiler may insert a second instruction after the loop body to reset certain bits of REGCTRL. Since hardware prefetching has been turned on by the loop body, resetting may turn off the hardware prefetching. For example, after the execution of the loop body, another instruction "set_regctrl(0x00000000)" resets the control register to indicate that hardware prefetching is turned off. Note that, unlike prefetch (a[i+1]) and prefetch (b[i+1], the first and second instructions in FIG. 3C are not prefetching instructions.

FIG. 4A illustrates an examplary code snippet 400, which comprises a "for" loop. The code snippet 400 is similar to the code snippet 300, except that the incremental step for integer i is now 32 instead of 1. For illustrative purposes, suppose that each integer a[i] and b[i] takes a size of 4 bytes, thus a distance between the memory accesses of two consecutive iterations are 32x4=128 bytes. Further, suppose the cache line is configured to be 64 bytes, thus the hardware should prefetch two cache lines ahead each time.

FIG. 4B illustrates an embodiment of a coordinated prefetching scheme 430, which is implemented on the code snippet 400. The compiler may set a control register to indicate that hardware prefetching is turned on and a prefetching stride equals two. For example, as shown in FIG. 4B, before execution of the loop body, an instruction "set_regctrl(0x00000003)" sets the three LSBs of the control register to 011. Further, after execution of the loop body, another instruction "set_regctrl(0x00000000)" turns or switches off hardware prefetching.

Compared with the conventional software prefetching scheme 330, which repeatedly executes two prefetching instructions for every iteration in the "for" loop, the coordinated prefetching scheme 350 or 430 does not insert any prefetching instructions. Instead, the coordinated prefetching scheme 350 or 430 only inserts two instructions to set/reset the programmable control register. Regardless of how many iterations are in the "for" loop, the two instructions are only executed once, which reduces both code size and execution time. Further, unlike a conventional hardware prefetching scheme which relies on a MHT to understand the memory access pattern, the coordinated prefetching scheme 330 or 430 may use the compiler to understand the code snippet. Thus, prefetch hardware may follow the stride set by the compiler. Accordingly, the accuracy of hardware prefetching may be improved, which in turn reduces cache pollution and bandwidth requirement. It should be noted that disclosed hardware prefetching schemes may or may not still use a MHT. If no MHT is used, the compiler may be configured to identify a memory address from which the prefetching starts, and additional mechanisms may be incorporated to ensure that hardware prefetching ends at a desired memory address. In addition, as hardware prefetching is turn off after the loop body instead of running all the time, power consumption may be reduced. Overall, the coordinated prefetching scheme 330 or 430 may be advantageous over conventional software/hardware prefetching schemes.

A loop described herein may be a sequence of statements specified once but may be carried out one or more times in succession. The code "inside" the loop body is obeyed a specified number of times, or once for each of a collection of items, or until some condition is met, or indefinitely. In functional programming languages, such as Haskell and Scheme, loops can be expressed by using recursion or fixed point iteration rather than explicit looping constructs. Tail recursion is a special case of recursion which can be easily transformed to iteration. Examplary types of loops include, but are not limited to, "while ()...end", "do...while()", "do...until()", "for()...next", "if()...end", "if()...else...","if()...elseif()...", wherein () expresses a condition, and ... expresses codes to operate under the condition. In use, loops may involve various key words such as "for", "while", "do", "if", "else", "end", "until", "next", "foreach", "endif', and "goto". One skilled in the art will recognize different types of loops and other types of structures that can be identified as a code segment.

A program referred to herein may be implemented via any technique or any programming language. There may be hundreds of programming languages available. Examples of programming languages include, but are not limited to, Fortran, ABC, ActionScript, Ada, C, C++, C#, Cobra, D, Daplex, ECMAScript, Java, JavaScript, Objective-C, Perl, PHP, Python, REALbasic, Ruby, Smalltalk, Tcl, tcsh, Unix shells, Visual Basic, .NET and Windows PowerShell.

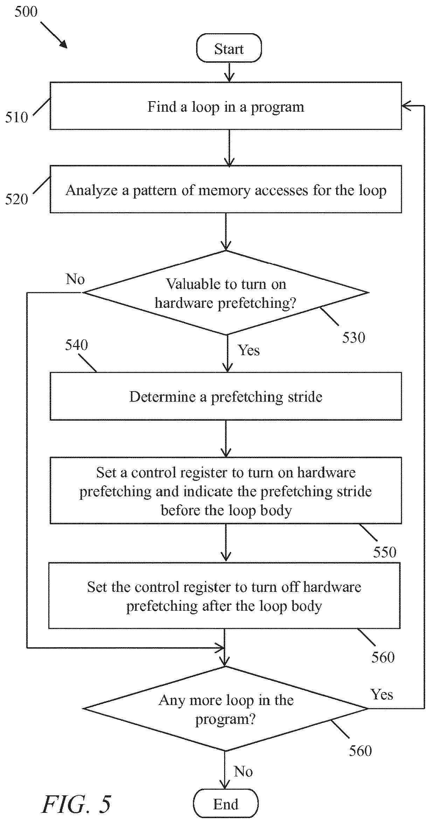

FIG. 5 illustrates an embodiment of a coordinated prefetching method 500, which may be implemented by a compiler in a processor system (e.g., the processor system 100). The method 500 may be used to prefetch data and/or instructions for a program in operation. The method 500 starts from step 510, where the compiler may identify or find a code segment or snippet in the program. In an embodiment, each loop is identified as a code segment. Next, in step 520, the compiler may analyze a pattern of memory accesses required by the loop. If the pattern of memory accesses is understandable or predictable by the compiler, it may be deemed as regular; otherwise, it may be deemed as irregular. In step 530, the compiler may determine whether it is valuable to turn on hardware prefetching for the loop based on the pattern of memory accesses. If the condition in the block 530 is met, the method 500 may proceed to step 550. Otherwise, the method 500 may proceed to step 570.

In step 540, a prefetching stride may be determined based on the pattern of memory accesses. For example, in an array-based computation involving numbers that are stored 5 cache lines apart, the prefetching stride may be set to 5. In step 550, the compiler may program a control register to indicate the on state of hardware prefetching and the prefetching stride. In an embodiment, programming the control register is realized by inserting an instruction before a body of the loop (i.e., loop body). Note that since hardware prefetching is turned on, no prefetching instructions may be needed inside the loop body anymore. In step 560, the compiler may insert another instruction after the loop body to reset the control register (i.e., turning off hardware prefetching).

In step 570, the compiler may determine if there is any more loop in the program. If the condition in the block 570 is met, the method 500 may return to step 510, where another loop can be identified. Otherwise, the method 500 may end.

It should be noted that the method 500 may be modified within the scope of this disclosure. For example, instead of finding and analyzing loops one-by-one, all loops may be found and analyzed first before determining hardware prefetching state for any loop. For another example, if desired, the on state of hardware prefetching and the prefetching stride may be set in separate steps, or in separate control registers. For yet another example, in step 530, if the compiler determines that it is not valuable to turn on hardware prefetching, additional steps, such as inserting prefetching instruction(s) inside the loop body, may be executed before proceeding to step 570. Moreover, the method 500 may include only a portion of necessary steps in prefetching data or instructions for the program. Thus, additional steps, such as transforming the code segment to an executable code (e.g., assembly code or machine code), executing the executable code, and prefetching data or instructions, may be added to the method 500 wherever appropriate.

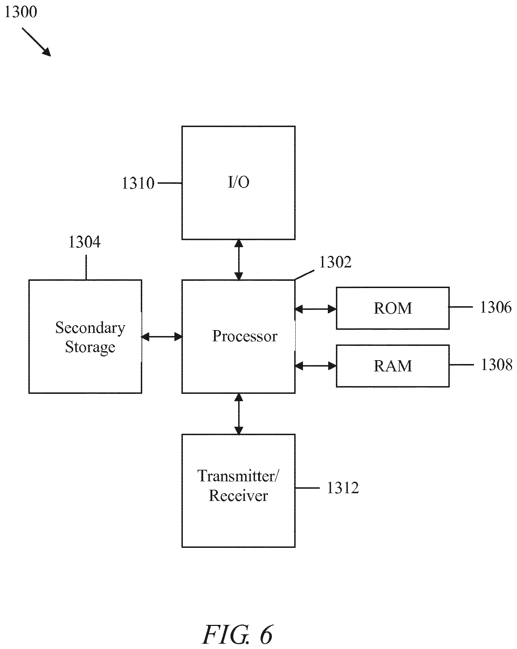

The schemes described above may be implemented on a network component, such as a computer or network component with sufficient processing power, memory resources, and network throughput capability to handle the necessary workload placed upon it. FIG. 6 illustrates an embodiment of a network component or computer system 1300 suitable for implementing one or more embodiments of the methods disclosed herein, such as the coordinated prefetching scheme 350, the coordinated prefetching scheme 430, and the coordinated prefetching method 500. Further, the computer system 1300 may be configured to implement any of the apparatuses described herein, such as the processor system 100.

The computer system 1300 includes a processor 1302 that is in communication with memory devices including secondary storage 1304, read only memory (ROM) 1306, random access memory (RAM) 1308, input/output (I/O) devices 1310, and transmitter/receiver 1312. Although illustrated as a single processor, the processor 1302 is not so limited and may comprise multiple processors. The processor 1302 may be implemented as one or more central processor unit (CPU) chips, cores (e.g., a multi-core processor), field-programmable gate arrays (FPGAs), application specific integrated circuits (ASICs), and/or digital signal processors (DSPs), and/or may be part of one or more ASICs. The processor 1302 may be configured to implement any of the schemes described herein, including the coordinated prefetching method 500. The processor 1302 may be implemented using hardware or a combination of hardware and software.

The secondary storage 1304 is typically comprised of one or more disk drives or tape drives and is used for non-volatile storage of data and as an over-flow data storage device if the RAM 1308 is not large enough to hold all working data. The secondary storage 1304 may be used to store programs that are loaded into the RAM 1308 when such programs are selected for execution. The ROM 1306 is used to store instructions and perhaps data that are read during program execution. The ROM 1306 is a non-volatile memory device that typically has a small memory capacity relative to the larger memory capacity of the secondary storage 1304. The RAM 1308 is used to store volatile data and perhaps to store instructions. Access to both the ROM 1306 and the RAM 1308 is typically faster than to the secondary storage 1304.

The transmitter/receiver 1312 may serve as an output and/or input device of the computer system 1300. For example, if the transmitter/receiver 1312 is acting as a transmitter, it may transmit data out of the computer system 1300. If the transmitter/receiver 1312 is acting as a receiver, it may receive data into the computer system 1300. The transmitter/receiver 1312 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. The transmitter/receiver 1312 may enable the processor 1302 to communicate with an Internet or one or more intranets. I/O devices 1310 may include a video monitor, liquid crystal display (LCD), touch screen display, or other type of video display for displaying video, and may also include a video recording device for capturing video. I/O devices 1310 may also include one or more keyboards, mice, or track balls, or other well-known input devices.

It is understood that by programming and/or loading executable instructions onto the computer system 1300, at least one of the processor 1302, the secondary storage 1304, the RAM 1308, and the ROM 1306 are changed, transforming the computer system 1300 in part into a particular machine or apparatus (e.g., a processor system having the novel functionality taught by the present disclosure). The executable instructions may be stored on the secondary storage 1304, the ROM 1306, and/or the RAM 1308 and loaded into the processor 1302 for execution. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

At least one embodiment is disclosed and variations, combinations, and/or modifications of the embodiment(s) and/or features of the embodiment(s) made by a person having ordinary skill in the art are within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R₁, and an upper limit, Rᵤ, is disclosed, any number falling within the range is specifically disclosed. In particular, the following numbers within the range are specifically disclosed: R = Rₗ + k ^{∗} (Rᵤ - Rₗ), wherein k is a variable ranging from 1 percent to 100 percent with a 1 percent increment, i.e., k is 1 percent, 2 percent, 3 percent, 4 percent, 5 percent, ..., 70 percent, 71 percent, 72 percent, ..., 95 percent, 96 percent, 97 percent, 98 percent, 99 percent, or 100 percent. Moreover, any numerical range defined by two R numbers as defined in the above is also specifically disclosed. The use of the term "about" means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Each and every claim is incorporated as further disclosure into the specification and the claims are embodiment(s) of the present disclosure. The discussion of a reference in the disclosure is not an admission that it is prior art, especially any reference that has a publication date after the priority date of this application.

## Claims

1. A prefetch method in a processor system comprising a compiler, a control register, a processor, at least one cache, and a hardware prefetcher for hardware prefetching of data from a memory system into said at least one cache, wherein the control register comprises a sequence of bits and a least significant bit is provided at a first end of the sequence of bits and a most significant bit is provided at an opposing end of the sequence of bits, the method comprising:
• identifying, by the compiler, a source code segment in a source code program, wherein the source code segment is formed by a loop (510);
• analyzing, by the compiler, a memory access pattern required by the source code segment (520);
• if the memory access pattern is regular, using the compiler to:
determine a prefetching stride based on the memory access pattern (540),
insert before the source code segment a first instruction into the program, wherein the first instruction is used to set a value of the least significant bit of the control register to a value indicating an on state of the hardware prefetching and is used to set values of bits next to the least significant bit of the sequence of bits for indicating the prefetching stride (550),
insert after the source code segment a second instruction into the program, wherein the second instruction is used to set the value of the least significant bit to a value indicating an off state of the hardware prefetching (560),
compile the source code program equipped with the first and second instructions into a first object code;
• if the memory access pattern is irregular, using the compiler to:
insert at least one prefetching instruction into the source code segment,
compile the source code program equipped with the at least one prefetching instruction into a second object code;
• executing, by the processor, either the first object code, if the memory access pattern is regular, or the second object code, if the memory access pattern is irregular.

2. A computer program product, stored on a storage of a computer system comprising a compiler, a control register, a processor, at least one cache, and a hardware prefetcher, whereby said computer program product comprises instructions which, when executed by the processor of the computer system, cause the processor to carry out the method of claim 1.

## Patentansprüche

1. Vorausladungsverfahren in einem Prozessorsystem, das einen Compiler, ein Steuerregister, einen Prozessor, mindestens einen Cache, und einen Hardware-Vorauslader zum Hardware-Vorausladen von Daten von einem Speichersystem in den mindestens einen Cache umfasst, wobei das Steuerregister eine Bitfolge umfasst und wobei ein niedrigstwertiges Bit an einem ersten Ende der Bitfolge bereitgestellt wird und wobei ein höchstwertiges Bit an einem gegenüberliegenden Ende der Bitfolge bereitgestellt wird, wobei das Verfahren Folgendes umfasst:
• Identifizieren eines Quellcodesegments in einem Quellcodeprogramm durch den Compiler, wobei das Quellcodesegment durch eine Schleife gebildet wird (510);
• Analysieren eines Speicherzugriffmusters, das für das Quellcodesegment erforderlich ist, durch den Compiler (Schritt 520) ;
• Verwenden des Compilers zu Folgendem, falls das Speicherzugriffsmuster gleichmäßig ist:
Bestimmen einer vorausgeladenen Schrittlänge auf Grundlage des Speicherzugriffsmusters (540);
Einfügen einer ersten Anweisung in das Programm vor dem Quellcodesegment, wobei die erste Anweisung dazu verwendet wird, einen Wert des niedrigstwertigen Bits des Steuerregisters auf einen Wert einzustellen, der einen Ein-Zustand der Hardware-Vorausladung anzeigt und verwendet wird, um die Werte von Bits neben dem niedrigstwertigen Bit der Bitfolge zum Anzeigen der vorausgeladenen Schrittlänge einzustellen (550),
Einfügen einer zweiten Anweisung in das Programm nach dem Quellcodesegment, wobei die zweite Anweisung dazu verwendet wird, den Wert des niedrigstwertigen Bits auf einen Wert einzustellen, der einen Aus-Zustand der Hardware-Vorausladung anzeigt (560),
Kompilieren des Quellcodeprogramms, das mit der ersten und der zweiten Anweisung ausgestattet ist, in einen ersten Objektcode;
• Verwenden des Compilers zu Folgendem, falls das Speicherzugriffsmuster nicht gleichmäßig ist:
Einfügen von mindestens einer Vorausladungsanweisung in das Quellcodesegment,
Kompilieren des Quellcodeprogramms, das mit der mindestens einen Vorausladungsanweisung ausgestattet ist, in einen zweiten Objektcode;
• Ausführen von entweder dem ersten Objektcode, falls das Speicherzugriffsmuster gleichmäßig ist, oder dem zweiten Objektcode, falls das Speicherzugriffsmuster nicht gleichmäßig ist, durch den Prozessor.

2. Computerprogrammprodukt, das auf einem Speicher eines Computersystems gespeichert ist und einen Compiler, ein Steuerregister, einen Prozessor, mindestens einen Cache, und einen Hardware-Vorauslader umfasst, wobei das Computerprogrammprodukt Anweisungen umfasst, die beim Ausführen durch den Prozessor des Computersystems den Prozessor dazu veranlassen, das Verfahren nach Anspruch 1 durchzuführen.

## Revendications

1. Procédé de pré-lecture dans un système informatique comprenant un compilateur, un registre de commande, un processeur, au moins une mémoire cache et un pré-lecteur matériel pour la pré-lecture matérielle de données à partir d'un système de mémoire dans ladite au moins une mémoire cache, dans lequel le registre de commande comprend une séquence de bits et un bit le moins significatif est disposé à une première extrémité de la séquence de bits et un bit le plus significatif est disposé à une extrémité opposée de la séquence de bits, le procédé comprenant :
• l'identification, par le compilateur, d'un segment de code source dans un programme de code source, dans lequel le segment de code source est formé par une boucle (510) ;
• l'analyse, par le compilateur, d'un modèle d'accès à la mémoire exigé par le segment de code source (étape 520) ;
• si le modèle d'accès à la mémoire est normal, l'utilisation du compilateur pour :
déterminer une avancée de la pré-lecture sur la base du modèle d'accès à la mémoire (540),
insérer avant le segment de code source une première instruction dans le programme, dans lequel la première instruction est utilisée pour ajuster une valeur du bit le moins significatif du registre de commande à une valeur indiquant un état activé de la pré-lecture matérielle et est utilisée pour ajuster des valeurs de bits suivant le bit le moins significatif de la séquence de bits pour indiquer l'avancée de la pré-lecture (550),
insérer après le segment de code source une seconde instruction dans le programme, dans lequel la seconde instruction est utilisée pour ajuster la valeur du bit le moins significatif à une valeur indiquant un état désactivé de la pré-lecture matérielle (560),
compiler le programme de code source muni des première et seconde instructions dans un premier code objet ;
• si le modèle d'accès à la mémoire est anormal, l'utilisation du compilateur pour :
insérer au moins une instruction de pré-lecture dans le segment de code source,
compiler le programme de code source muni de l'au moins une instruction de pré-lecture dans un second code objet ;
• l'exécution, par le processeur, soit du premier code objet, si le modèle d'accès à la mémoire est normal, soit du second code objet, si le modèle d'accès à la mémoire est anormal.

2. Produit de programme informatique, stocké dans un dispositif de stockage d'un système informatique comprenant un compilateur, un registre de commande, un processeur, au moins une mémoire cache et un pré-lecteur matériel, moyennant quoi ledit produit de programme informatique comprend des instructions qui, quand il est exécuté par le processeur du système informatique, amènent le processeur à réaliser le procédé selon la revendication 1.
